**Europäisches Patentamt**

**European Patent Office**

**Office européen des brevets**

(19)

(11) Veröffentlichungsnummer : **0 345 208 B1**

## (12) EUROPÄISCHE PATENTSCHRIFT

(45) Veröffentlichungstag der Patentschrift :
**13.05.92 Patentblatt 92/20**

(21) Anmeldenummer : **89730134.7**

(22) Anmeldetag : **31.05.89**

(51) Int. Cl.⁵ : **F16D 66/02**

(54) **Überwachungsorgan für einen durch Abrieb verschleissbaren Belag.**

(30) Priorität : **01.06.88 DE 3818877**

(43) Veröffentlichungstag der Anmeldung :
**06.12.89 Patentblatt 89/49**

(45) Bekanntmachung des Hinweises auf die
Patenterteilung :
**13.05.92 Patentblatt 92/20**

(84) Benannte Vertragsstaaten :
**DE ES FR GB IT NL SE**

(56) Entgegenhaltungen :
**EP-A- 0 145 324**
**DE-A- 2 334 942**
**DE-A- 2 356 242**
**DE-A- 3 007 887**

(56) Entgegenhaltungen :
**DE-B- 2 535 265**
**FR-A- 2 319 880**
**FR-A- 2 574 508**
**GB-A- 2 063 397**

(73) Patentinhaber : **Siemens Aktiengesellschaft**
**Postfach 22 16 34**
**W-8000 München 2 (DE)**

(72) Erfinder : **Janssen, Karl-Heinz, Dipl.-Ing.**
**Reiherweg 2**
**W-2880 Brake (DE)**
Erfinder : **Kontants, Horst**
**Klingenbergstrasse 19**
**W-2900 Oldenburg (DE)**
Erfinder : **Schürmann, Bernhard, Dipl.-Ing.**
**Wurtweg 6**
**W-2880 Brake (DE)**

EP 0 345 208 B1

## Beschreibung

Die Erfindung betrifft ein Überwachungsorgan für einen durch Abrieb verschleißbaren Belag gemäß dem Oberbegriff von Patentanspruch 1.

Zur Überwachung des Verschleißes von Bremsbelägen ist ein Überwachungsorgan bekannt, das aus einem isolierten elektrischen Leiter, aus einem verschleißbaren, am Halter des Bremsbelages fixierbaren Fühlerelement aus einem Kunststoffkörper und aus einem Stecker besteht. Dabei ist das eine Ende des isolierten elektrischen Leiters mit Abstand zur Verschleißfläche des Kunststoffkörpers in diesen als Fühler eingebettet, während der Stecker das andere Ende des isolierten elektrischen Leiters aufnimmt (DE-B-25 35 265). Sobald bei diesem Überwachungsorgan der Fühler mit der Bremsscheibe Kontakt bekommt, wird ein Stromkreis geschlossen.

Bei einem anderen bekannten Überwachungsorgan zur Anzeige der Abnutzung des Reibbelages einer Bremsbacke ist dem als Kontaktstück ausgebildeten Fühlerelement ein Überstromschalter zugeordnet. Kontaktstück und Überstromschalter liegen zwischen den beiden Polen eines zweipoligen Steckanschlusses, über den das Kontaktstück zusätzlich in einen Meßstromkreis einbezogen ist (DE-C-26 10 903, DE-A-21 02 077).

Bei einer anderen bekannten Vorrichtung zur automatischen Kontrolle des Belagverschleißes von Scheibenbremsen an Kraftfahrzeugen sind im oder am Bremsbelag zwei Geberelemente angeordnet, die parallel und mit unterschiedlichem Abstand zur Verschleißfläche des Bremsbelages verlaufen. Dadurch können zwei unterschiedliche Abnutzungsgrade zur Anzeige gebracht werden (DE-U- 72 22 046). Eine Weiterentwicklung dieses Zweifachfühlers sieht vor, in einem in den Bremsbelag einsetzbaren Meßchip mehrere Leiterbahnen vorzusehen, die senkrecht zur Reibfläche des Bremsbelages verlaufen und einen gestaffelten Abstand zur Verschleißfläche aufweisen. Die Leiterbahnen können ebenfalls als Schleife ausgebildet sein, wobei die Leiterbahnen in einer Anschlußleiste enden. In jeder Schleife kann eine Schmelzsicherung angeordnet sein, die bei Berührung der Schleife mit dem die Gegenreibfläche tragenden metallischen Teil infolge eines elektrischen Kurzschlusses durchschmelzen und damit die betreffende Schleife ausschalten (DE-A-30 07 887). - Ein weiterhin bekanntes Mehrfachüberwachungsorgan für den Bremsbelag an Kraftfahrzeugen enthält eine Auslösevorrichtung, die aus einem Brechelement aus keramischem Material mit einem Fingerpaar besteht; das Fingerpaar weist mehrere nach außen abragende Paare von Vorsprüngen auf, deren Außenkanten bei den einzelnen Paaren verschiedene Abstände voneinander haben. Weiterhin ist jedem Vorsprung eine auf dem Brechelement aufgebrachte Widerstandsbahn zugeordnet. Diese Widerstandsbahnen liegen einander parallelgeschaltet in einem Anzeigestromkreis, an den die Auslösevorrichtung über zwei Anschlußpunkte anschaltbar ist. Beim Abbrechen der Vorsprünge eines Fingerpaares wird die zugehörige Widerstandsbahn unterbrochen, wodurch der Gesamtwiderstand der Auslösevorrichtung zunimmt. Durch die unterschiedlichen Abstände der Außenkanten der paarweise angeordneten Vorsprünge wird also im Verlauf der Bremsbelagabnutzung ein stufenweises Anwachsen des Gesamtwiderstandes der Auslösevorrichtung erreicht. Demzufolge kann der Abnutzungsgrad der Bremsbeläge durch eine einfache Widerstandsbestimmung ermittelt werden (DE-U- 72 14 034).

Ausgehend von einem Überwachungsorgan mit den Merkmalen des Oberbegriffes des Patentanspruches 1 liegt der Erfindung die Aufgabe zugrunde, das Überwachungsorgan so auszubilden, daß auf rein elektrischem Wege eine stufenförmige Erfassung der Abnutzung des verschleißbaren Belages über nur zwei elektrische Anschlüsse möglich ist.

Zur Lösung dieser Aufgabe ist gemäß der Erfindung vorgesehen, daß parallel zum ersten isolierten elektrischen Leiter wenigstens ein zweiter isolierter elektrischer Leiter angeordnet ist, daß das als Fühler dienende Ende des zweiten isolierten elektrischen Leiters mit vom Abstand des Endes des ersten isolierten elektrischen Leiters abweichenden Abstand zur Verschleißfläche in das Fühlerelement eingebettet ist und daß der Stecker, der auch das andere Ende des zweiten isolierten elektrischen Leiters bzw. aller weiteren isolierten elektrischen Leiter aufnimmt, mit zwei Steckanschlüssen versehen ist und eine elektrische Schaltung enthält, die den einen Steckanschluß über jeweils einen Überstromschalter und den anderen Steckanschluß über eine Dioden- und Widerstandsschaltung mit jedem der parallel zueinander angeordneten isolierten elektrischen Leiter verbindet.

Bei einem derart ausgebildeten Überwachungsorgan erfolgt die Meßwerterfassung auf rein elektrischem Wege. Dabei steht das Meßsignal unabhängig vom Bremsvorgang jederzeit zur Verfügung. Dieses Meßsignal wird von einem Strom gebildet, der sich entweder aus der Summe der über die einzelnen Überstromschalter fließenden Teilströme zusammensetzt und somit der Anzahl der noch nicht durch Abrieb freigelegten Fühler im Fühlerelement entspricht, oder der sich durch den vom ersten noch nicht zerstörten Überstromschalter definierten Strompfad ergibt. Dieses Meßsignal kann an den beiden Steckanschlüssen abgegriffen werden. - Durch Anordnung der elektrischen Schaltung in einem vom Fühlerelement getrennten Stecker ist im übrigen die elektrische Schaltung gegen zu hohe Temperatur, wie sie bei Bremsvorgängen auftreten, geschützt.

In Weiterbildung der Erfindung sind die Fühler parallel zur Verschleißfläche des Fühlerelementes angeordnet; dabei bilden die zwei oder mehr elektrischen Leiter die Leiter einer wenigstens zweiadrigen Flachbandleitung, wobei der eine Endabschnitt dieser Flachbandleitung derart in das Fühlerelement eingebettet ist, daß dessen Flachseiten senkrecht oder annähernd senkrecht zur Verschleißfläche des Fühlerelementes verlaufen. Infolgedessen verlaufen auch die Leiter der Flachbandleitung parallel zur Verschleißfläche des Fühlerelementes. - Bei einer solchen Ausgestaltung des Überwachungsorgans wird auf einfache Weise durch den Abstand der Leiter zueinander in der Flachbandleitung mit hoher Genauigkeit der Abstand der Fühler untereinander in dem Fühlerelement bestimmt. Bei der Herstellung des Fühlerelementes ist dann nur noch auf die genaue Positionierung des Endabschnitts der Flachbandleitung zu achten. - Die verwendete Flachbandleitung kann beispielsweise aus nebeneinander angeordneten, miteinander verklebten oder auf einer Folie angeordneten einzelnen Adern bestehen. Zweckmäßiger ist aber die Verwendung einer Flachbandleitung aus flachen, zwischen zwei Kunststoffolien angeordneten Leitern oder einer Flachbandleitung in Form einer flexiblen Leiterplatte, wie sie als Verdrahtungselement in elektronischen Baugruppen verwendet wird. Derartige Flachbandleitungen sind einfach zu fertigen und zu handhaben, beispielsweise zu falten.

Der Stecker, der das andere Ende der isolierten elektrischen Leiter und die elektrische Schaltung aufnimmt, kann mit zwei Steckanschlüssen in Form von zwei einzeln angeordneten, einpoligen Steckbuchsen ausgebildet sein, wie sie beispielsweise aus der DE-B-25 35 265 bekannt sind. Dadurch läßt sich eine Feuchtigkeitsbrücke zwischen den beiden Anschlußpolen vermeiden. Bei dem Steckanschluß kann es sich aber auch um einen zweipoligen Steckanschluß, gegebenenfalls in koaxialer Form, handeln. - Die in dem Stecker enthaltene elektrische Schaltung ist zweckmäßig als Hybrid-Bauteil ausgebildet. Eine solche Ausgestaltung bietet die Möglichkeit, die Überstromschalter als in die Leiterbahnen des Hybrid-Bauteils integrierte Schmelzelemente auszubilden.

Für die Dioden- und Widerstandsschaltung, welche die beiden Steckanschlüsse des Steckers mit den zwei oder mehr isolierten elektrischen Leitern verbindet, kommt insbesondere eine Ausführung in Betracht, bei der jedem Leiter eine Diode und den Dioden eine Reihenschaltung von Widerständen zugeordnet ist, deren Anzahl um eins kleiner ist als die Zahl der Leiter, wobei jeweils eine Diode mit einem anderen Teilungspunkt der Reihenschaltung verbunden ist. In diesem Fall weisen die Stromwege über die verschiedenen Dioden unterschiedliche Widerstände auf. Eine Vereinfachung dieser elektrischen Schaltung kann darin bestehen, daß die dem zuletzt abreibenden Leiter zugeordnete Diode durch eine direkte Verbindung des Leiters mit der Reihenschaltung ersetzt ist. - Die Dioden- und Widerstandsschaltung kann aber auch aus einer Reihenschaltung von Diode und Widerstand für jeden Leiter und aus einer einfachen Parallelschaltung dieser Reihenschaltungen bestehen.

Ausführungsbeispiele des neuen Überwachungsorgans sind in den Figuren 1 bis 5 dargestellt. Dabei zeigen die Figuren 1 und 2 in Ansicht und im Querschnitt die Ausgestaltung des Fühlerelementes mit einem eingebetteten Endabschnitt einer Flachbandleitung, Figur 3 einen am anderen Ende der Flachbandleitung angeordneten Stecker und die Figuren 4 und 5 zwei in dem Stecker befindliche Dioden- und Widerstandsschaltungen.

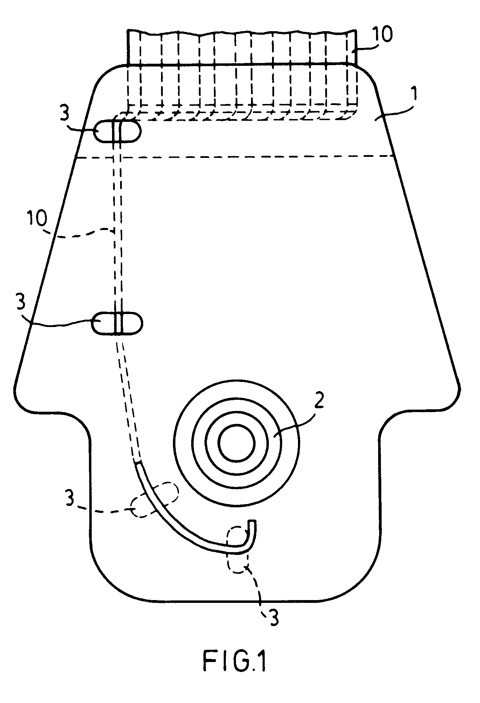

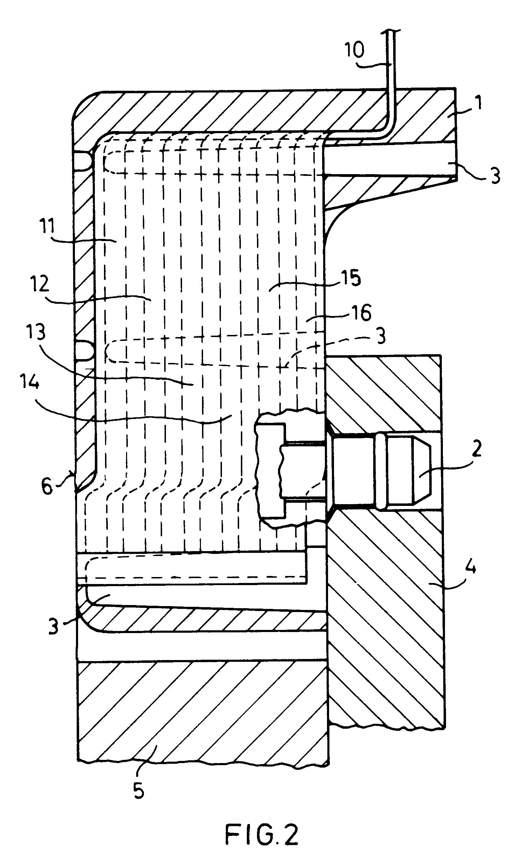

Gemäß den Figuren 1 und 2 besteht das Fühlerelement 1 des neuen Überwachungsorgans aus einem Kunststoffkörper, in den der eine Endabschnitt einer Flachbandleitung 10 eingebettet ist. Der Kunststoffkörper, der in seiner äußeren Gestaltung dem aus der DE-B-33 24 865 bekannten Fühlerelement entspricht, ist mit einem Rastelement 2 versehen, welches in eine entsprechende Bohrung eines Halters 4 für den Bremsbelag 5 eingeführt ist.

Die mit ihrem einen Endabschnitt in den Kunststoffkörper eingebettete Flachbandleitung 10 enthält sechs elektrische Leiter 11 bis 16, die in vorbestimmten Abständen zueinander zwischen zwei Kunststoffolien, z. B. Polyimid-Folien, angeordnet sind. Die vorbestimmten Abstände entsprechen den erforderlichen Abständen der von den elektrischen Leitern gebildeten Fühler im Fühlerelement 1. Der Endabschnitt der Flachbandleitung ist in dem Fühlerelement 1 derart angeordnet, daß dieser parallel zur Verschleißfläche 6 des Fühlerelementes 1 verläuft und daß dessen Flachseiten senkrecht zur Verschleißfläche 6 des Fühlerelementes verlaufen. Die genaue Positionierung des Endabschnittes der Flachbandleitung in dem Fühlerelement 1 erfolgt mit Hilfe von Halteelementen beim Spritzen des Kunststoffkörpers. Diese Halteelemente hinterlassen in dem fertigen Fühlerelement die Bohrungen 3. - Der Endabschnitt der Flachbandleitung 10 ist in dem Fühlerelement 1 außer einer zweimaligen Abwinkelung ein- oder zweifach gefaltet, um ihn aus der für die Führung der Flachbandleitung und der für die Fixierung des am anderen Ende angeordneten Steckers am Bremsenhalter erforderlichen Position in die geeignete Fühler-Position zu bringen.

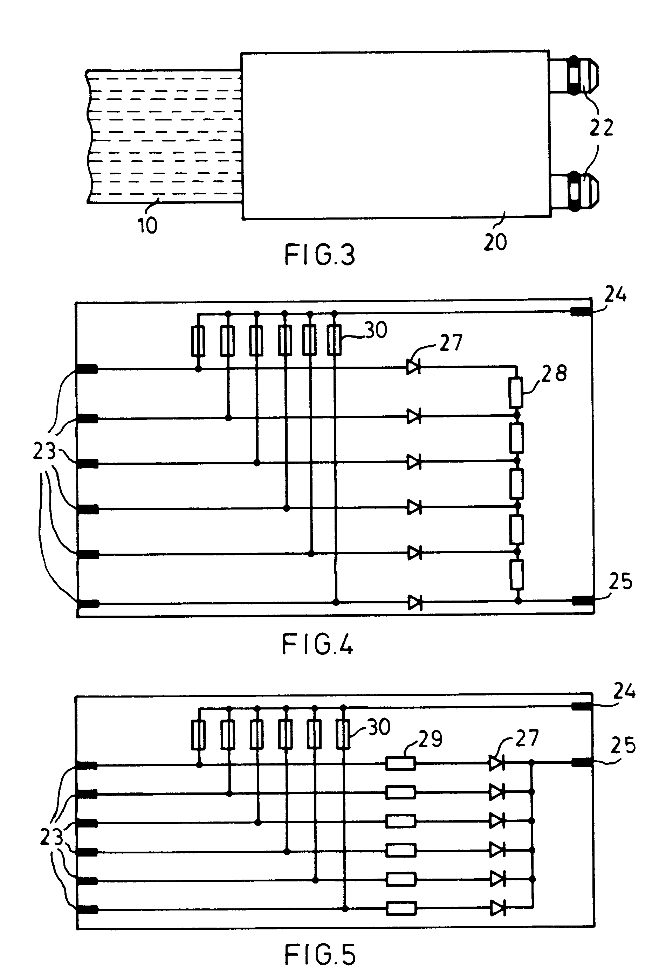

Fig. 3 zeigt den Stecker 20, in den von der einen Seite her die Flachbandleitung 10 eingeführt ist und der an einer anderen Seite zwei einpolige Steckbuchsen 22 aufweist. Der Stecker kann mit einem nicht näher dargestellten Befestigungselement zur Befestigung des Steckers am Bremssattel versehen sein oder er wird an den Gegenkontakten für die Steckbuchsen 22 fixiert. In dem Stecker befindet sich ein Hybrid-Bauteil, das die Enden der Flachbandleitung 10 mit den einpoligen Steckbuchsen 22 verbindet.

EP 0 345 208 B1

Ein erstes Ausführungsbeipiel für die Schaltung des Hybrid-Bauteiles zeigt Fig. 4. Zwischen den Anschlüssen 23 für die Leiter der Flachbandleitung 10 und den Anschlüssen 24 und 25, die zu den einpoligen Steckbuchsen 22 führen, befindet sich eine Dioden-und Widerstandsschaltung, die zunächst eine Verbindung des Anschlusses 24 über jeweils einen Überstromschalter 30 in Form einer Schmelzsicherung mit jedem Anschluß 23 vorsieht. Weiterhin ist jeder Anschluß 23 über eine Entkopplungsdiode 27 mit einem anderen Teilungspunkt einer aus fünf Widerständen 28 bestehenden Reihenschaltung verbunden. Der Fußpunkt der Reihenschaltung ist mit dem Anschluß 25 verbunden. - In einer vereinfachten Ausführungsform kann der Leiter, der als letzter abgerieben wird, direkt mit dem entsprechenden Teilungspunkt der Reihenschaltung verbunden sein.

Bei einem zweiten Ausführungsbeispiel für die Schaltung des Hybrid-Bauteiles (Fig. 5) ist der Anschluß 24 ebenfalls über je einen Überstromschalter 30 in Form einer Schmelzsicherung mit jedem Anschluß 23 verbunden. Jeder Anschluß 23 ist weiterhin über die Reihenschaltung eines Widerstandes 29 und einer Entkopplungsdiode 27 mit dem Anschluß 25 verbunden.

Beim Betrieb des neuen Überwachungsorgans liegt mit der Schaltung gemäß Fig. 5 an dem Anschluß 24 ständig eine Versorgungsspannung an. Im nicht abgenutzten Zustand des Fühlerelementes 1 fließt über jeden Überstromschalter 30 und die zugehörige Entkopplungsdiode sowie den zugehörigen Widerstand bzw. den Spannungsteiler ein Teilstrom, der sich nach der Größe des jeweiligen Widerstandes richtet. Der Summenstrom aus diesen Teilströmen wird am Anschluß 25 abgenommen und einer Auswerteelektronik zugeführt. Sobald durch Abnutzung des Fühlerelementes 1 die Bremsscheibe der Bremse einen Kontakt mit dem ersten Leiter herstellt, fließt von dem Anschluß 24 über das zugehörige Sicherungselement und den erwähnten Leiter zur geerdeten Bremsscheibe ein Kurzschlußstrom, der das entsprechende Sicherungselement 30 zerstört. Dadurch reduziert sich der am Anschluß 25 abgreifbare Summenstrom, und zwar unabhängig davon, ob gerade ein Bremsvorgang stattfindet oder nicht. Die Größe des Summenstromes ist somit eine direkte Aussage für den stufenweisen Abnutzungsgrad des Fühlerelementes 1 und damit des Bremsbelages 5.

Beim Betrieb eines Überwachungsorgans mit der Schaltung gemäß Fig. 4 ist der Stromweg mit dem jeweils geringsten Widerstand maßgebend. Der Widerstand dieses Stromweges legt zusammen mit einem an den Anschluß 25 angeschalteten externen Widerstand das Teilverhältnis eines Spannungsteilers fest.

**Patentansprüche**

1. Überwachungsorgan für einen durch Abrieb verschleißbaren Belag, insbesondere für einen Bremsbelag (5), bestehend aus
– einem ersten isolierten elektrischen Leiter (11),
– einem verschleißbaren, an einem Halter (4) des verschleißbaren Belages fixierbaren Fühlerelement (1) aus einem Kunststoffkörper, in den das eine Ende des ersten isolierten elektrischen Leiters mit Abstand zur Verschleißfläche (6) als Fühler eingebettet ist, und
– einem Stecker (20), der das andere Ende des ersten isolierten elektrischen Leiters aufnimmt,
**dadurch gekennzeichnet,**
– daß parallel zu dem ersten isolierten elektrischen Leiter (11) wenigstens ein zweiter isolierter elektrischer Leiter (12 - 16) angeordnet ist,
– daß das als Fühler dienende Ende des zweiten isolierten elektrischen Leiters (12 - 16) mit vom Abstand des Endes des ersten isolierten elektrischen Leiters (11) abweichendem Abstand zur Verschleißfläche (6) in das Fühlerelement (1) eingebettet ist, und
– daß der Stecker (20), der auch das andere Ende des zweiten isolierten elektrischen Leiters oder aller weiteren isolierten elektrischen Leiter (12 - 16) aufnimmt, mit zwei Steckanschlüssen (24, 25) versehen ist und eine elektrische Schaltung enthält, die den einen Steckanschluß (24) über jeweils einen Überstromschalter (30) und den anderen Steckanschluß (25) über eine Dioden- und Widerstandsschaltung (27/28) mit jedem der parallel zueinander angeordneten isolierten elektrischen Leiter (11 - 16) verbindet.

2. Überwachungsorgan nach Anspruch 1, **dadurch gekennzeichnet**, daß die Fühler parallel zur Verschleißfläche (6) des Fühlerelementes (1) angeordnet sind, daß die elektrischen Leiter (11 - 16) die Leiter einer wenigstens zweiadrigen Flachbandleitung (10) bilden und daß der eine Endabschnitt dieser Flachbandleitung (10) derart in das Fühlerelement (1) eingebettet ist, daß dessen Flachseiten senkrecht oder annähernd senkrecht zur Verschleißfläche (6) des Fühlerelementes (1) verlaufen.

3. Überwachungsorgan nach Anspruch 2, **dadurch gekennzeichnet**, daß die Flachbandleitung (10) aus flachen, zwischen zwei Kunststoffolien angeordneten Leitern (11 - 16) besteht.

4. Überwachungsorgan nach Anspruch 2, dadurch **gekennzeichnet**, daß die Flachbandleitung (10) aus einer flexiblen Leiterplatte besteht.

5. Überwachungsorgan nach einem der Ansprüche 1 bis 4, **dadurch gekennzeichnet**, daß die beiden

4

Steckanschlüsse (24, 25) als zwei einpolige Steckbuchsen (22) ausgebildet sind.

6. Überwachungsorgan nach einem der Ansprüche 1 bis 5, **dadurch gekennzeichnet**, daß die elektrische Schaltung aus einem Hybrid-Bauteil besteht, bei dem die Überstromschalter in Form von Schmelzelementen (30) in die Leiterbahnen integriert sind.

7. Überwachungsorgan nach einem der Ansprüche 1 bis 6, **dadurch gekennzeichnet**, daß die Dioden- und Widerstandsschaltung aus einer Reihenschaltung von Diode (27) und Widerstand (29) für jeden Leiter und aus einer Parallelschaltung aller Reihenschaltungen besteht (Fig. 5).

8. Überwachungsorgan nach einem der Ansprüche 1 bis 6, **dadurch gekennzeichnet**, daß die Dioden- und Widerstandsschaltung aus einer Diode (27) für jeden Leiter und einer Reihenschaltung von Widerständen (28) besteht, deren Anzahl um eins kleiner ist als die Zahl der Leiter, wobei jeweils eine Diode mit einem anderen Teilungspunkt der Reihenschaltung verbunden ist und jeder Stromweg einen anderen Widerstandswert aufweist.

9. Überwachungsorgan nach Anspruch 8, **dadurch gekennzeichnet,** daß die dem zuletzt abreibenden Leiter zugeordnete Diode durch eine direkte Verbindung des Leiters mit der Reihenschaltung ersetzt ist.

## Claims

1. Monitoring element for a lining subject to wear by abrasion, in particular for a brake lining (5), consisting of
   – a first insulated electrical conductor (11),
   – a sensor element (1) which is subject to wear, can be fixed to a holder (4) of the lining that is subject to wear and consists of a plastic body into which the one end of the first insulated electrical conductor is embedded at a distance from the wear surface (6) as a sensor, and
   – a plug (20) which receives the other end of the first insulated electrical conductor,
   characterised in that
   – at least a second insulated electrical conductor (12 - 16) is arranged parallel to the first insulated electrical conductor (11),
   – in that the end, serving as sensor, of the second insulated electrical conductor (12 - 16) is embedded into the sensor element (1) at a distance from the wear surface (6) deviating from the distance of the end of the first insulated electrical conductor (11), and
   – in that the plug (20) which also receives the other end of the second insulated electrical conductor or all the further insulated electrical conductors (12 - 16) is provided with two plug-type terminals (24, 25) and contains an electrical circuit which connects the one plug-type terminal (24) via in each case an excess current switch (30) and the other plug-type terminal (25) via a diode and resistor circuit (27/28) to each of the insulated electrical conductors (11 - 16) arranged parallel to one another.

2. Monitoring element according to Claim 1, characterised in that the sensors are arranged parallel to the wear surface (6) of the sensor element (1), in that the electrical conductors (11 - 16) form the conductors of an at least two-conductor flat ribbon line (10) and in that the one end section of this flat ribbon line (10) is embedded in the sensor element (1) in such a way that its flat sides run perpendicular or approximately perpendicular to the wear surface (6) of the sensor element (1).

3. Monitoring element according to Claim 2, characterised in that the flat ribbon line (10) consists of flat conductors (11 - 16) arranged between two plastic films.

4. Monitoring element according to Claim 2, characterised in that the flat ribbon line (10) consists of a flexible printed circuit board.

5. Monitoring element according to one of Claims 1 to 4, characterised in that the two plug-type terminals (24, 25) are constructed as two single-pole tip jacks (22).

6. Monitoring element according to one of Claims 1 to 5, characterised in that the electric circuit consists of a hybrid component in which the excess current switches are integrated in the form of fusable elements (30) into the conductor tracks.

7. Monitoring element according to one of Claims 1 to 6, characterised in that the diode and resistor circuit consists of a series connection of diode (27) and resistor (29) for each conductor and of a parallel connection of all the series connections (Fig. 5).

8. Monitoring element according to one of Claims 1 to 6, characterised in that the diode and resistor circuit consists of a diode (27) for each conductor and a series connection of resistors (28) whose number is one smaller than the number of the conductors, in each case one diode being connected to another junction of the series connection and each current path having a different resistance value.

9. Monitoring element according to Claim 8, characterised in that the diode assigned to the last conductor to wear through is replaced by a direct connection of the conductor to the series connection.

**Revendications**

1. Dispositif pour contrôler une garniture susceptible d'usure par abrasion, notamment une garniture de frein (5), constitué par
– un premier conducteur électrique isolé (11),
– un élément de détection (1), qui peut s'user, peut être fixé sur un support (4) de la garniture apte à s'user et est formé d'un corps en matière plastique, dans lequel une extrémité du premier conducteur électrique isolé est insérée en tant que capteur, à distance de la surface d'usure (6), et
– un connecteur (20), qui reçoit l'autre extrémité du premier conducteur électrique isolé,
caractérisé par le fait
– qu'au moins un second conducteur électrique isolé (12-16) est disposé en parallèle avec le premier conducteur électrique isolé,
– que l'extrémité, utilisée comme capteur, du second conducteur électrique isolé (12-16) est insérée dans l'élément de détection (1), à une distance de la surface d'usure (6), qui diffère de la distance de l'extrémité du premier conducteur électrique isolé (11) par rapport à ladite surface, et
– que le connecteur (20), qui loge également l'autre extrémité du second conducteur électrique isolé ou de tous les autres conducteurs électriques isolés (12-16), comporte deux bornes enfichables (24,25) et comporte un circuit électrique qui raccorde une borne d'enfichage (24) par l'intermédiaire d'un discontacteur à surintensité (10) et l'autre borne enfichable (25) par l'intermédiaire d'un circuit à diodes et résistances (27/28) à chacun des conducteurs électriques isolés (11-16) disposés en parallèle.

2. Dispositif de contrôle suivant la revendication 1, caractérisé par le fait que les capteurs sont disposés parallèlement à la surface d'usure (6) de l'élément de détection (1), que les conducteurs électriques (11-16) constituent les conducteurs d'un conducteur en forme de bande plate (10) comportant au moins deux fils, et qu'une section d'extrémité de ce conducteur en forme de bande plate (10) est insérée dans l'élément de détection (1) de telle sorte que ses faces planes sont perpendiculaires ou approximativement perpendiculaires à la surface d'usure (6) de l'élément de détection (1).

3. Dispositif de contrôle suivant la revendication 2, caractérisé par le fait que le conducteur en forme de bande plate (10) est constitué de conducteurs plats (11-16) disposés entre deux feuilles de matière plastique.

4. Dispositif de contrôle suivant la revendication 2, caractérisé par le fait que le conducteur en forme de bande plate (10) est formé par une plaquette à circuits imprimés flexible.

5. Dispositif de contrôle suivant l'une des revendications 1 à 4, caractérisé par le fait que les deux bornes enfichables (24,25) sont réalisées sous la forme de deux douilles unipolaires (22).

6. Dispositif de contrôle suivant l'une des revendications 1 à 5, caractérisé par le fait que le circuit électrique est constitué par un composant hybride dans lequel le discontacteur à surintensité est intégré sous la forme d'éléments flusibles (30) dans les voies conductrices.

7. Dispositif de contrôle suivant l'une des revendications 1 à 6, caractérisé par le fait que le circuit à diodes et résistances est formé par un circuit série formé d'une diode (27) et d'une résistance (29) pour chaque conducteur et par un montage en parallèle de tous les circuits série (figure 5).

8. Dispositif de contrôle suivant l'une des revendications 1 à 6, caractérisé par le fait que le circuit à diodes et résistances est constitué par une diode (27) pour chaque conducteur et par un circuit série de résistances (28), dont le nombre est inférieur d'une unité au nombre des conducteurs, respectivement une diode étant raccordée à un autre point de division du circuit série, et chaque trajet du courant possédant une autre valeur résistive.

9. Dispositif de contrôle suivant la revendication 8, caractérisé par le fait que la diode associée au conducteur qui s'use en dernier, est remplacée par une liaison directe du conducteur au circuit série.

FIG.1

FIG.2

FIG.3

FIG.4

FIG.5